# EUROPEAN PATENT SPECIFICATION

(11) **EP 4 005 901 B1**
(45) Date of publication and mention of the grant of the patent: **16.10.2024**
(21) Application number: 20846201.0
(22) Date of filing: 05.06.2020
(51) Int. Cl.: B62D 3/04, B62D 5/04, F16H 55/24

(54) **BEARING BUSHING, PRELOAD STRUCTURE, HOUSING OF TRANSMISSION MECHANISM, AND ASSEMBLING STRUCTURE OF WORM GEAR AND WORM**
LAGERBUCHSE, VORSPANNUNGSSTRUKTUR, GEHÄUSE EINES GETRIEBEMECHANISMUS UND MONTAGESTRUKTUR VON SCHNECKENGETRIEBE UND SCHNECKE
BAGUE DE PALIER, STRUCTURE DE PRÉCHARGE, BOÎTIER DE MÉCANISME DE TRANSMISSION, ET STRUCTURE D'ASSEMBLAGE D'ENGRENAGE À VIS SANS FIN ET DE VIS SANS FIN

(30) Priority: 30.07.2019 CN 201921212066 U; 30.07.2019 CN 201921212057 U; 30.07.2019 CN 201921212059 U; 30.07.2019 CN 201921212612 U
(43) Date of publication of application: 01.06.2022
(73) Proprietor: Bosch Huayu Steering Systems Co., Ltd., Shanghai 201821 (CN)
(72) Inventor: PAN, Yishan, Shanghai 201821 (CN); DONG, Hang, Shanghai 201821 (CN); JIANG, Zhuo, Shanghai 201821 (CN); HUA, Dandan, Shanghai 201821 (CN); FENG, Xinghui, Shanghai 201821 (CN); CHEN, Haiming, Shanghai 201821 (CN); LI, Shan, Shanghai 201821 (CN); TANG, Meng, Shanghai 201821 (CN); QIAN, Jiemiao, Shanghai 201821 (CN)
(74) Representative: Grey, Ian Michael
(86) International application number: PCT/CN2020/094644
(87) International publication number: WO 2021/017643

(56) References cited:
- CN-A- 108 725 572
- CN-U- 207 333 665
- DE-A1- 102017 219 395
- DE-A1- 102017 219 395
- DE-B4- 102008 009 107
- DE-B4- 102008 009 107
- JP-A- 2006 044 430
- JP-A- 2006 111 133
- KR-A- 20170 080 899
- KR-B1- 101 423 949
- KR-B1- 101 423 949

## Description

### Technical Field

This invention relates to the technical field of the automobile steering system, especially relates to a bearing bushing, a preload structure, and an assembling structure of a worm gear and a worm.

### Background

In the current column-drive electric power steering design, the housing design is mainly for internally supporting the worm gear, the worm transmission mechanism, externally connecting to the whole vehicle steering column frame and the motor. While limited by the interface size of the whole vehicle, need to design different housings according to different designs, which usually leads to a complicated structure of the housing, and a poor universality, the small end of the worm directly uses a closed/halfly closed structure, that is not facilitating to the assembling of the preload structure to some extent.

In addition, due to tolerances and installation errors in the manufacturing of parts, there exists problems such as excessive friction torque or excessive free clearance, which eventually leads to excessive rotating friction torque, which affects the steering feeling or worm gear knocking noise when driving on broken roads. The prior solutions are bracket bearing solution, separate compression spring at one end of the worm solution, etc., but they all have many shortcomings, such as: tolerance accumulation caused by too many parts, and robustness is not high enough; the requirements for parts and components processing technique are too high, which results in the high cost; the requirements for the processing accuracy of the parts are too high, which results in the inconstant quality, and so on.

DE102008009107B4 discloses mechanical reduction gears with worm gears and worm gears, the gear has an elastic damping ring comprising a retaining unit that retains an elastic unit for drive clearance between a wall of a retainer of a guide bearing and an outer ring of the guide bearing. The elastic unit is arranged in a predetermined position of the wall of the retainer, so that a force is applied over the elastic damping ring. The force presses the guide bearing in a direction, in which a center distance between an axle of a screw and an axle of a worm gear reduces.

DE102017219395A1 discloses prestressing device for pressing a gear shaft, which has a first gear member, of a gearing against a toothing of a second gear member of said gearing comprises a housing, a bearing outer cage for receiving a bearing which rotatably supports the gear shaft, wherein the bearing outer cage is arranged in the housing, and a leaf spring which is supported by its end portions on respectively associated supporting flanks of the bearing outer cage and which is suitable for pressing with a central portion, which runs between the supporting flanks, against the bearing.

KR20170080899A relates to a safety cover unit for an outlet. A hinge coupling structure is applied to a safety cover to effectively open and close an opening part of a plug insertion port of a socket. Thus, it is possible to prevent an electric shock accident and an inflow of foreign substances such as dust without affecting a contact point of a plug terminal hole. Also, a loss can be prevented by intactly maintaining a state of being assembled to a socket during plug insertion. To this end, the safety cover unit for an outlet according to the present invention comprises: a hinge base which is fitted and coupled to a coupling hole punched on one surface of an outlet, has a hook shaft on the lower surface to be rotated, and has a hinge hole extended in the horizontal direction while being connected to both sides on the upper part; and a disk-shaped cover member which has one side coupled to the hinge hole of the hinge base to be able to be folded, opens and closes the opening part of a plug insertion hole, and has a circular arc-shaped coupling protrusion facing the same to be closely placed on the inner circumferential surface of the opening part of the plug insertion hole on the lower edge thereof.

Thus, designing a type of assembling structure that is a simple structure and is able to better adjust the worm gear and the worm with is very necessary.

### Content

The invention is as defined in claim 1-15.

The technical problem this invention solves is for overcoming the above-mentioned shortcomings of the prior art, providing a type of bearing bushing, a preload structure, a housing of transmission mechanism, and an assembling structure of a worm gear and a worm.

The present invention solves the above technical problems through the following technical solutions:
A bearing bushing, which comprises: a bushing body and a buffer member fixed therein;
the buffer member comprises a spring piece, the spring piece is arranged on the top of the bushing body, the spring piece comprises an extending part and a fixed part, the extending part obliquely extends downward from two opposite sides of the fixed part.

Preferably, the fixed part is arranged on the top surface of the bushing body, one end of the extending part that is away from the fixed part abuts against two sides of the bushing body, respectively.

Preferably, the fixed part is a C-shaped clip-shaped part.

Preferably, an outer edge of an upper piece of the C-shaped clip-shaped part is upwardly tilted to form a tilted piece, and both ends of an lower piece of the C-shaped clip-shaped part are respectively connected to the extending part.

Preferably, an end of the extending part that is away from the fixed part is bent toward the bushing body to form a bent part.

Preferably, the fixed part is fixed to the top surface of the bushing body, an end of the extending part that is away from the fixed part is tilted outward with respect to both sides of the bushing body.

Preferably, the buffer member further comprises a top elastic pad arranged on the top surface of the bushing body, the fixed part is arranged with a hole, and the hole is sleeved on the top elastic pad so that the fixed part is fixed with respect to the bushing body.

Preferably, an end of the extending part that is away from the fixed part is arranged with a contact protrusion.

Preferably, the buffer member further includes: a top elastic pad fixed on the top surface of the bearing bushing and/or side elastic pads fixed on both sides of the bearing bush.

Preferably, the side elastic member is a concave-shaped member.

Preferably, the side elastic member extends along the circumferential direction of the bushing body.

Preferably, the bushing body is a circular ring-shaped member.

An EPSc worm end preload structure. The EPSc worm end preload structure includes the bearing bushing as described above.

Preferably, the EPSc worm end preload structure further includes a bearing, and the bearing is arranged inside the bearing bushing.

A worm gear and worm assembling structure includes the above-mentioned EPSc worm end preload structure.

Preferably, the worm gear and worm assembling structure further includes a bearing support module arranged to one end of the worm, the EPSc worm end preload structure is arranged in the bearing support module and is arranged between the worm and the bearing support module.

Preferably, the bearing support module is arranged to the small end of the worm.

Preferably, the fixed part is arranged on the top surface of the bushing body, and one end of the extending part that is away from the fixed part abuts against both sides of the bushing body respectively;
the fixed part is fixed to the bearing support module.

Preferably, the fixed part is a C-shaped clip-shaped part;
the fixed part clamps to the upper part of the bearing support module.

Preferably, the fixed part is fixed to the top surface of the bushing body, and an end of the extending part that is away from the fixed part is tilted outward with respect to both sides of the bushing body;

Two sides of an inner hole of the bearing support module are formed into insert holes, the bearing bushing is arranged in the inner hole, the extending part is inserted into the insert holes, and the top surface of the bearing bushing abuts against the top surface of the inner hole.

The positive progressive effect of the present invention is that the transmission mechanism housing is arranged with an end cover and a bearing support module for connecting with the whole vehicle which is separated from the housing module that accommodates the worm gear and the worm, this realizes assemblies of different whole vehicles wherein only needs to change the end cover and the bearing mount support module, does not need to redesign the entire housing, which facilitates the assembling of the whole vehicle and reduces the production cost.

Compared the present invention to the prior art, when assembling different vehicles, only needs to change the plastic end cover and the bearing mount support module, and does not need to redesign the whole housing, which facilitates the assembling of the whole vehicle and reduces the production cost.

Compared with the prior art, the present invention adjusts the location of the preload device from the big end of the worm to the small end of the worm, and redesigns the bearing bushing of the preload device, which greatly reduces the requirements for parts and components processing technique, the elastic coefficient of the leaf spring is also easier to control, so that the preload effect of the worm gear and the worm can be better adjusted, the friction torque can be reduced, and the risk of the engaging noise of the worm gear and the worm under various working conditions can be reduced, while the detachable worm gear and worm housing facilitates the assembling of the whole vehicle, when assembling different whole vehicles, only needs to change the plastic end cover and the bearing mount support module, does not need to redesign the entire housing, which reduces the production cost.

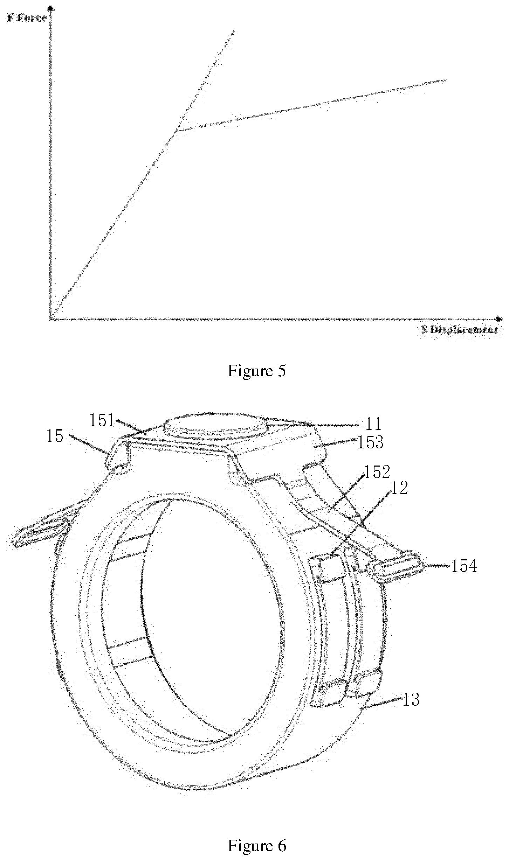

The bearing bushing provides a special preload force as shown in Figure 5 through the deformation of the extending part of the spring piece relative to the fixed part, which enhances the robustness of the preload design, reduces the friction torque, and reduces the engaging noise of the worm gear and the worm under various working conditions. The EPSc worm end preload structure and the worm gear and worm assembling structure have the same effect as described above.

Compared to the present invention with the prior art, the spring piece contacts the housing at one end and presses the bush at one end, when the worm swings, the spring piece is deformed, which exerts a preload force, so the worm is always taking a radial force that presses against the worm gear, to enhance the robustness of the preload design, reduce the friction torque, and reduce the engaging noise of the worm gear and the worm under various working conditions.

### Description of the Drawings

Fig. 1 is a perspective structural view of a bearing bushing according to Embodiment 1 of the present invention.
Fig. 2 is a perspective structural view of a spring piece according to Embodiment 1 of the present invention.
Fig. 3 is a structural view of the matching of the bearing bushing and the housing according to Embodiment 1 of the present invention.
Fig. 4 is an exploded structural view of the worm gear and worm assembling structure according to Embodiment 1 of the present invention.
Fig. 5 is a diagram showing the relationship between the amount of compression of the spring piece and the force according to Embodiment 1 of the present invention.
Fig. 6 is a perspective structural view of a bearing bushing according to Embodiment 2 of the present invention.
Fig. 7 is a perspective structural view of a spring piece according to Embodiment 2 of the present invention.
Fig. 8 is a structural view of the matching of the bearing bushing and the housing according to Embodiment 2 of the present invention.
Fig. 9 is an exploded structural view of the worm gear and worm assembling structure according to Embodiment 2 of the present invention.
Fig. 10 is a diagram showing the relationship between the amount of compression of the spring piece and the force according to Embodiment 2 of the present invention.
Fig. 11 is a structural view of a worm gear and worm assembling structure according to Embodiment 3 of the present invention.
Fig. 12 is another structural view of the worm gear and worm assembling structure according to Embodiment 3 of the present invention.
Fig. 13 is a perspective structural view of a bearing bushing according to Embodiment 3 of the present invention.
Fig. 14 is a perspective structural view of the spring piece in Fig. 13.
Fig. 15 is a structural view of the matching of the bearing bushing and the bearing support module according to Embodiment 3 of the present invention.
Fig. 16 is a diagram showing the relationship between the amount of compression of the spring piece and the force according to Embodiment 3 of the present invention.
Fig. 17 is a perspective structural view of a bearing bushing according to Embodiment 4 of the present invention.
Fig. 18 is a perspective structural view of the spring piece in Fig. 16.
Fig. 19 is a structure view of the matching of the bearing bushing and the bearing support module according to Embodiment 4 of the present invention.

### Detailed Embodiments

In below, in conjunction with drawings, using embodiments as a way to further describe the present invention, but the present invention is not limited to the scope of the described embodiments.

### Embodiment 1

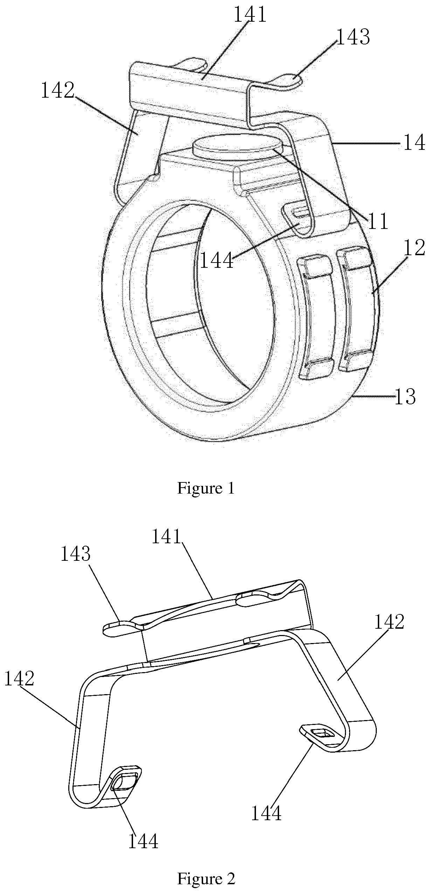

Referring to Figures 1-4, this embodiment provides a bearing bushing of an improved EPSc worm end preload structure, including a housing, rubber pads and a spring piece, the rubber pads are divided into a top rubber pad 11 and side rubber pads 12. The top rubber pad 11 is injection molded on the top of the housing 13, the side rubber pads 12 are injection molded on both sides of the housing 13, and the spring piece 14 is arranged on the outer side surface of the housing 13 above the side rubber pads 12; the spring piece 14 is formed by a C-shaped clip-shaped part 141 and two wings 142, the outer edge of the upper piece of the C-shaped clip-shaped part 141 is upwardly tilted to form a tilted piece, two ends of the lower piece of the C-shaped clip-shaped part 141 are respectively connected to the top ends of the two wings 142, the bottom ends of the two wings 142 are bent inward to form a bend part 144, and the bend part 144 is tightly attached to the housing 13, so that the C-shaped clip-shaped part 141 is suspended above the top rubber pad 11.

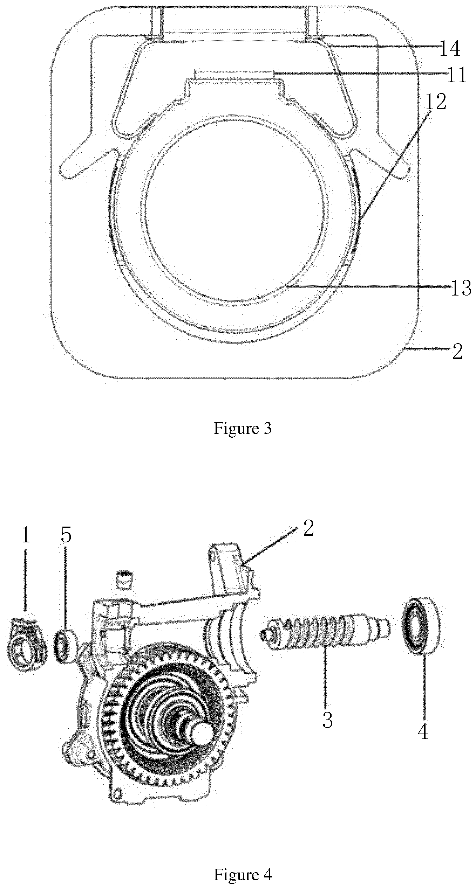

Referring to Figure 3, the C-shaped clip-shaped part 141 of the spring piece 14 in this embodiment is embedded and fixed on housing 2. The ends of worm 3 that clamp the housing 2 comprise a big end 32 and a small end 31, a pendulum bearing 4 is sleeved on the big end 32, between the pendulum bearing 4 and the big end 32 is an interference fit, the small end 31 is installed with a deep groove ball bearing 5 in the interference press-fit. The deep groove ball bearing 5 is then sleeved into the bearing bush 9, the outer edge of the pendulum bearing 4 is fixed on the housing 2 of the actuating device, the worm 3 can swing back and forth with the pendulum bearing 4 as the pivot joint, the pendulum bearing 4 has a large radial clearance, and the inner ring ball track adopts a special arc transition, during engaging of the worm gear and the worm, the pendulum bearing 4 will effectively guide the worm 3 to swing at a certain angle on its axis relative to the housing 2.

The top rubber pad 11 in this embodiment is disc-shaped, the side rubber pad 12 is concave-shaped, when the worm 3 swings greatly from side to side, protrusions at both ends of the side rubber pad 12 first contact the housing 2, since the contact area is small, the rigidity is small, it provides the first buffer step for the worm 3. When worm 3 continues to swing, the middle part of the rubber finally presses the housing over a large area to provide a buffer of greater rigidity, thereby reducing the risk of noise that the worm 3 hits the housing in two steps, meanwhile providing a rigid limiting point for the worm 3 to swing.

When the worm 3 swings, the bearing bushing 1 swings accordingly, when the worm 3 shakes left and right, the side rubber pads 12 and the spring piece 14 both limit and buffer the movement, when the worm 3 shakes up and down, the upper end of the spring piece 14 abuts the housing 2, two ends press on the bearing bushing 1, deformed under force, provides damping, and limits its tendency to move away from the worm gear.

The leaf piece 14 in this embodiment is a leaf spring, the relationship between its elastic force and displacement (compression amount) is presented by the solid line in Figure 5. The difference between the curve for spring force and displacement of the leaf spring and curves of other springs is that, when the compression displacement reaches a certain value, the compressive stiffness will decrease, which can ensure that the spring preload force is basically stable within a relatively large displacement range. During the assembling process, due to various accumulated tolerances, the compression amount fluctuates greatly in relative when the spring is installed in place. If using a regular spring for preloading, the provided preload force will also fluctuate greatly in relative, and the preset preload force cannot be well achieved, as shown by the dashed line in Figure 5. By using a spring of this shape here, the preload force can be kept within a predetermined range when the assembling tolerance is large.

In addition, the shape of the spring piece 14 is specially designed, so the force bearing direction of the bearing bushing 1 always points towards the central axis of the worm 3. When the worm 3 swings, the spring piece 14 can compress the bearing bushing 1, not only from the top direction, but also from the side directions to compress the bearing bush 9 through deformation, allowing the worm 3 to swing freely within a certain range, and finely limiting the shaking of the worm 3, providing damping. Meanwhile, the required preload force can be adjusted by adjusting the stiffness of the spring piece 14, so as to meet the requirements for engaging of various types of worm gears and worms.

### Embodiment 2

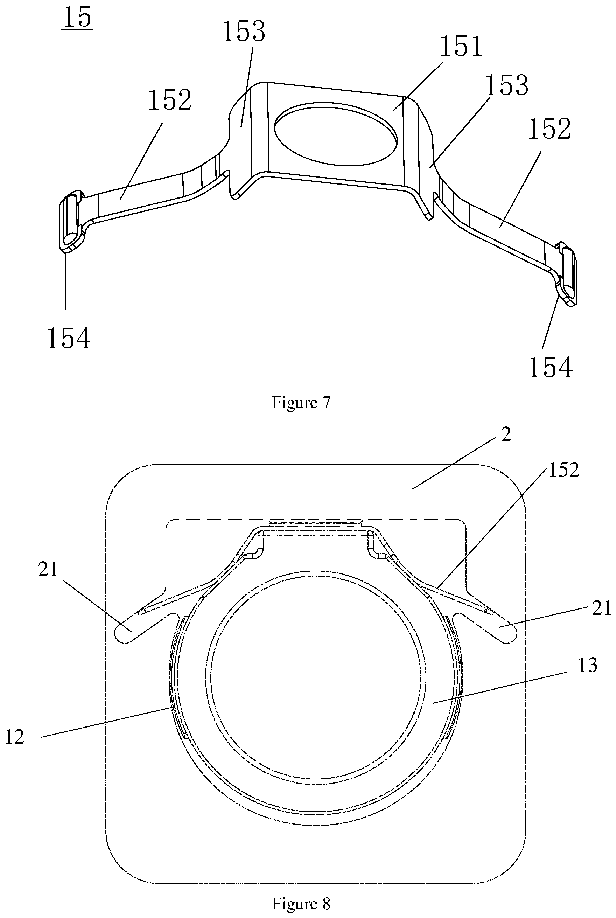

Referring to Figures 6-9, this embodiment provides a bearing bushing using on a worm end radial preload structure of an EPSc, which comprises a housing 13, rubber pads, and a spring piece 15. The rubber pads comprise a top rubber pad 11 and side rubber pads 12, the top rubber pad 11 is injection molded on the top of the housing 13, the side rubber pads 12 are injection molded on both sides of the housing 13, the spring piece 15 is embedded and fixed on the top of the housing 13;
the spring piece 15 includes a middle part 151 and two wings 152, two wings 152 are respectively fixed on both sides of the middle part 151 by a transition area 153, the middle part 151 is a plane rectangle, the two wings 152 are downwardly inclined strips, and the free ends of the two wings 152 are respectively fixed with an inward curving spring piece 154.

In this embodiment, the ends of the worm 1 comprise a large end 32 and a small end 31, a pendulum bearing 4 is sleeved on the large end 32, in between the pendulum bearing 4 and the large end 32 is an interference fit, and a bearing 5 is sleeved on the small end 31, the bearing bushing 1 is sleeved on the outer edge of the bearing 5, and the outer edge of the pendulum bearing 4 is fixed on the housing 2 of the actuating device, the pendulum bearing 4 has a large radial clearance, and the inner ring ball track adopts a special arc transition, during engaging of the worm gear and the worm, the pendulum bearing 4 will effectively guide the worm to swing at a certain angle on its axis relative to the housing 2.

In this embodiment, the top of the housing 13 is arranged with a protrusion platform, and the middle part 151 of the spring piece 15 is fixed on the protrusion platform by the top rubber pad 11.

In this embodiment, the top rubber pad 11 is disc-shaped.

In this embodiment, the side rubber pad 12 is concave-shaped, when the worm swings from side to side, protrusions at both ends of the side rubber pad 12 first contact the housing 13, since the contact area is small, the rigidity is small, it provides the first buffer step for the worm. When the worm continues to swing, the middle part of the side rubber pad 12 finally presses the housing 13 over a large area to provide a buffer of greater rigidity, thereby reducing the risk of noise that the worm hits the housing in two steps, meanwhile providing a rigid limiting point for the worm to swing.

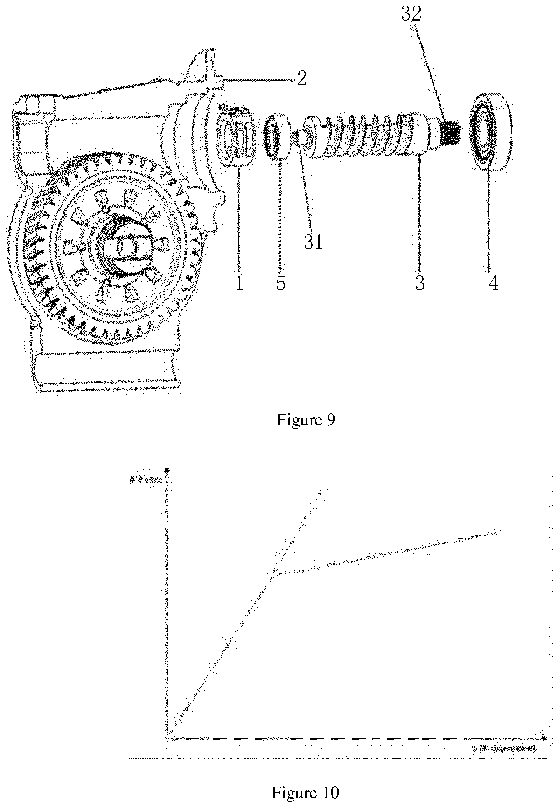

The spring piece 15 in this embodiment is a leaf spring, the relationship between its elastic force and displacement is shown in Figure 10, the difference between the curve for elastic force and displacement of the leaf spring and curves of other springs is that, when the compression displacement reaches a certain value, the compression stiffness will decrease, as shown by the solid line in Figure 10. This can ensure that the spring preload force is basically stable within a relatively large displacement range. During the assembling process, due to various accumulated tolerances, the compression amount fluctuates greatly in relative when the spring is installed in place. If using a regular spring for preloading, the provided preload force will also fluctuate greatly in relative, and the preset preload force cannot be well achieved, as shown by the dashed line in Figure 10. By using a spring of this shape here, the preload force can be kept within a predetermined range when the assembling tolerance is large.

During installation, the bearing bushing 1 is completely sleeved into the outer ring of the worm small end bearing 5, then installed into the housing 2 together, when the worm swings, the bearing bushing 1 swings accordingly, when the worm shakes left and right, the side rubber pad 12 and the spring piece 15 both limit and buffer the movement; when the worm shakes up and down, the upper end of the spring piece 15 abuts the housing 2, two ends press on the housing 13, deformed under force, provides damping, limits its tendency to move away from the worm gear.

In addition, after the shape of the spring piece 15 is matched with the housing 13, it can not only provide the preload force for swinging up and down, but also provide the preload force for swinging left and right, allowing the worm to swing freely within a certain range, also finely limiting the shaking of the worm, providing damping, meanwhile, the required preload force can be adjusted by adjusting the stiffness of the spring piece 15, so as to meet the requirements for engaging of various types of worm gears and worms.

### Embodiment 3

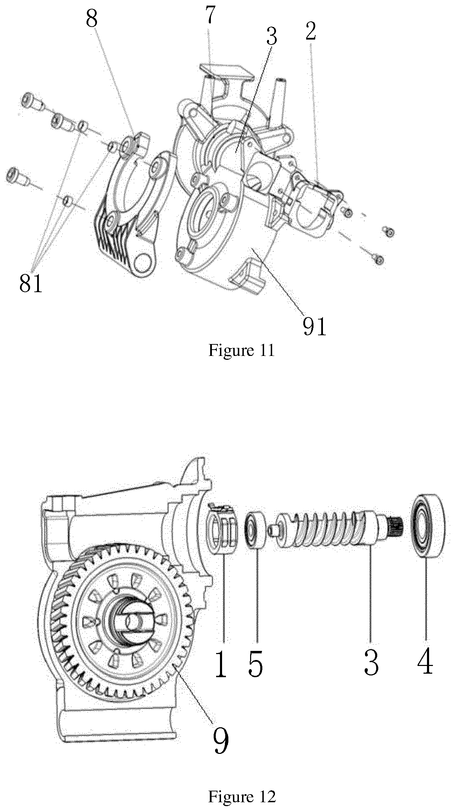

Referring to Figures 11-16, this embodiment provides a worm gear and worm assembling structure, comprising: a worm gear, a worm, a preload structure, and a housing, the housing is a detachable housing, the housing includes a worm gear housing 91, a worm housing 33, a connecting frame housing 7, a plastic end cover 8, a bearing support module 5, the worm housing 33 is fixed above the worm gear housing 91, one end of the worm housing 33 is fixed to the connecting frame housing 7. The worm housing 33, the worm gear housing 91, and the connecting frame housing 7 are in communication. The plastic end cover 8 is installed and fixed on the worm gear housing 91, the bearing support module 2 is connected to the other end of the worm housing 33 by screws, the worm gear 9 is installed in the worm gear housing 91, the worm 3 is installed in the worm housing 33, the worm gear 9 and the worm 3 are engaged with each other, the connecting frame housing 7 is connected with the steering column frame, one end of the worm 3 is arranged with a preload structure, and a pendulum bearing 4 is sleeved on the other end of the worm 3.

In this embodiment, the plastic end cover 8 is arranged with a mounting through-hole, a metal ring 81 is installed in the mounting through-hole by interference press-fit, a self-tapping screw penetrates the metal ring 81 to fix the plastic end cover 8 on the surface of the worm gear housing 91.

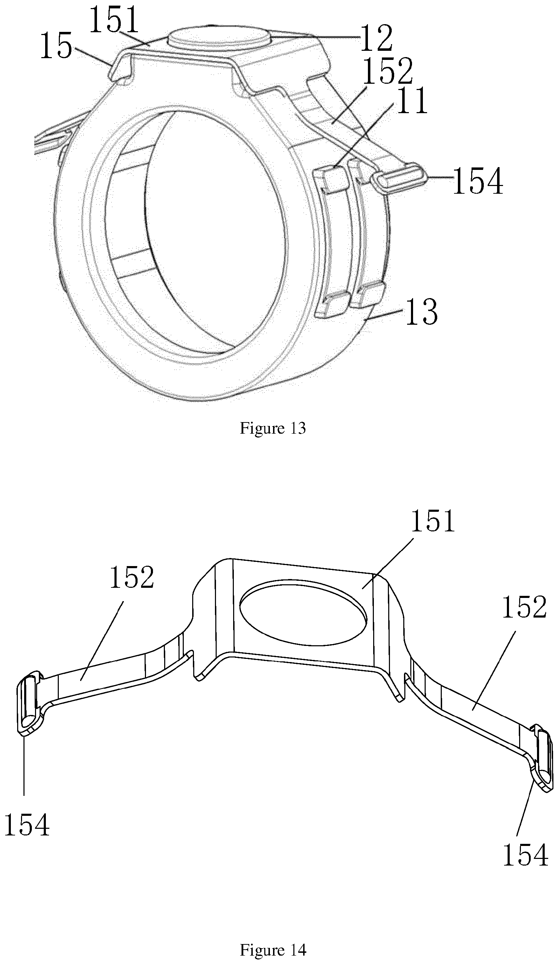

In this embodiment, preload structure includes a bearing 5, a bearing bushing 1, the bearing 5 is sleeved on the worm 3, the bearing bushing 1 is sleeved on the bearing 5. The bearing bushing 1 includes a housing (bushing body) 13, rubber pads, and a spring piece 15, the rubber pads comprise a top rubber pad 11 and side rubber pads 11-4, the top rubber pad 11 is injection molded on the top of the housing 11-1, side rubber pads 11-4 are injection molded on both sides of the housing 13, the spring piece 15 is installed on the housing 13. Rubber pads and spring pieces are all buffer members for applying the buffer effect. In this embodiment, rubber pads are used, but optionally, elastic pads of other alternative materials can also be used to achieve buffer on the top and both sides of the bearing bushing. The spring piece is arranged between the housing 13 and the bearing support module 2. Can clearly see from Figure 13, a spring piece 15 is arranged on the top of a housing 13, the spring piece 15 comprises an extending part and a fixed part, the extending part obliquely extends downward from two opposite sides of the fixed part.

Figure 13 shows a bearing bushing 1 of this embodiment. The bearing bushing 1 includes a housing 13 and a buffer member which connects to the housing 13.

As shown in Figure 14, the spring piece 15 includes a middle part 11-2-1a (fixed part) and two wings 152 (extending part), two wings 152 are respectively fixed on both sides of the the middle part 151 by the transition area, the middle part 151 is a plane rectangle, the two wings 152 are downwardly inclined strips, and the free ends of the two wings 152 (one end of the extending part which is far away from the fixed part) are respectively fixed with an inward curving spring piece 15. The inward curving spring piece forms a protrusion (contact protrusion) on the surface which faces the housing 13 through inward curving, through the protrusion the contact area between the inward curving spring piece 15- and the housing is reduced, which reduces the friction between them, facilitates the sliding of the inward curving spring piece 15- relative to the housing. The free ends of the two wings 152 are tilted outward relative to two sides of the housing 13.

In the bearing bushing, the middle part 151 of the spring piece 15 is fixed on the protrusion platform by the top rubber pad 11. Specifically, the middle part 151 of the spring piece 15 is arranged with a hole, the spring piece 15 is fixed to the top rubber pad 11 through a fit between the top rubber pad 11 and the hole.

In this embodiment, the top rubber pad 11 is disc-shaped, the side rubber pad is concave-shaped, when the worm swings greatly from side to side, protrusions at both ends of the side rubber pad 12 first contact the housing, since the contact area is small, the rigidity is small, it provides the first buffer step for the worm, when the worm continues to swing, the middle part of the side rubber pad finally presses the housing over a large area to provide a buffer of greater rigidity, thereby reducing the risk of noise that the worm hits the housing in two steps, meanwhile providing a rigid limiting point for the worm to swing. As shown in the figure, the side rubber pad 12 extends along the circumferential direction of the housing 13, the housing 13 is a circular ring member.

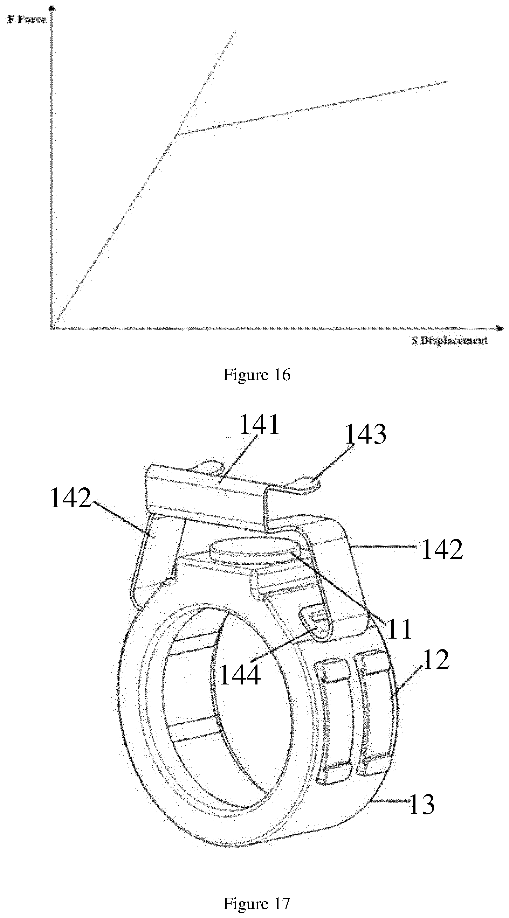

The spring piece 15 in this embodiment is a leaf spring, the relationship between its elastic force and displacement (the amount of compression or the amount of deformation) is shown in Figure 16, the difference between the curve for elastic force and displacement of the leaf spring and curves of other springs is that, when the compression displacement reaches a certain value, the compression stiffness will decrease, as shown by the solid line in Figure 16. This can ensure that the spring preload force is basically stable within a relatively large displacement range. During the assembling process, due to various accumulated tolerances, the compression amount fluctuates greatly in relative when the spring is installed in place. If using a regular spring for preloading, the provided preload force will also fluctuate greatly in relative, and the preset preload force cannot be well achieved, as shown by the dashed line in Figure 16. By using a spring of this shape here, the preload force can be kept within a predetermined range when the assembling tolerance is large.

In this embodiment, the inner hole of the bearing support module 2 is an adjustable hole, which can be inner holes with complicated shapes as a square hole, a round hole, etc.

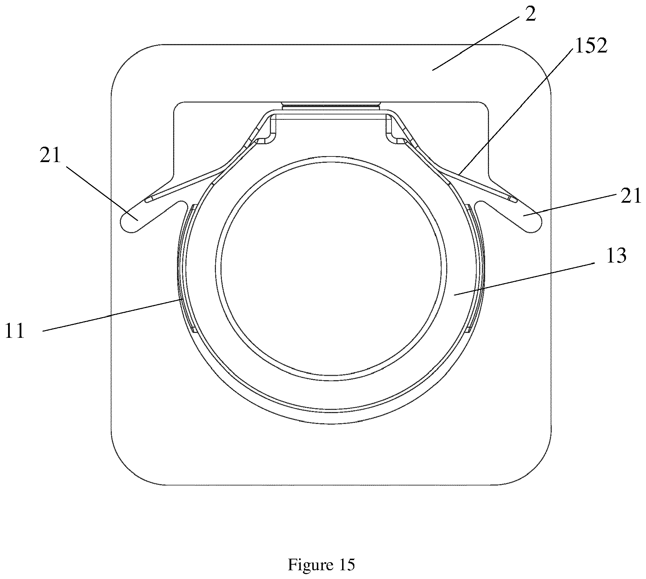

The preload structure is arranged in the bearing support module 2, and is arranged between the worm and the bearing support module 2. As shown in Figure 15, two sides of the inner hole of the bearing support module are formed into insert holes 21, the bearing bushing is arranged in the inner hole, two wings 152 are inserted into the insert holes 21, the top surface of the bearing bushing abuts against the top surface of the inner hole, therefore defining the spring piece 15 between the upper part of the bearing support module 2 and the housing 13. When the worm vibrates or deviates, the top rubber pad 11 and the side rubber pad 12 buffer the bearing bushing in the up-down directions and left-right directions to achieve the preload adjustment of the worm (preferably the small end of the worm), meanwhile, the spring piece 15 abuts against the wall surface of the insert hole 21, therefore buffering the bearing bushing in the up-down directions and left-right directions to achieve the preload adjustment of the worm (preferably the small end of the worm). Since insert holes 21 obliquely extend downward, and their inclined angles are different to inclined angles of the two wings 152 of the spring piece 15, which is, between extending directions of the insert holes 21 and extending directions of the two wings 152 are certain angles, so that, when the housing 13 moves left and right or moves up and down, the two wings 152 are deformed due to abutment against inner walls of the insert holes 21, thus achieving the buffer to the bearing bushing in the up-down direction and left-right direction.

In the specific implementation, the metal ring is firstly press-fitted with the plastic end cover for an interference fit, then three self-tapping screws are used to fix the plastic end cover with the worm gear housing, the press-fitted metal ring is mainly used to bear the tightening torque of the self-tapping screws, and protect the plastic end cover.

Referring to Figure 11, the worm gear of this embodiment does not require customized processing of threaded holes on the housing, as well as uses different plastic end cap designs to meet interface sizes of different vehicles, so that the housing body can remain unchanged and be used in various projects.

The bearing support module is fixed to the housing body by three or four screws, in such a way, while the outer structure of the housing remains unchanged, the inner hole shapes of the adjustable bearing support module are selectively adjusted according to the adopted bearing, so that, the bearing assembled inside obtains preload forces in different directions to restrain the worm gear and worm transmission mechanism.

The housing of this embodiment adopts a modular design, different models can match with different plastic end covers and bearing mount support modules, while the housing body remains unchanged, which greatly reduces design variants, reduces labor costs and parts procurement costs, flexiblizes designs, facilitates managements, since the housing body remains unchanged, it can be applied to various projects, greatly reduces the development cycle and shortens the project cycle; changing the entire complex housing design into the current modular housing composed by several small parts, can simplify the supplier's mold design, greatly reduces the difficulty of housing manufacturing, greatly improves the rate of qualified products, and improves the quality, stability and robustness; the detachable bearing mount support module can provide various preload forces to the bearing by changing the design structure of the support, and facilitates the assembling of the bearing mount.

The pendulum bearing in this embodiment has a large radial clearance, and the inner ring ball track adopts a special arc transition, during engaging of the worm gear and the worm, the pendulum bearing will effectively guide the worm to swing at a certain angle on its axis relative to the housing.

During the installation of the preload structure in this embodiment, the bearing bushing is completely sleeved into the outer ring of the worm small end bearing, then installed into the housing together, when the worm swings, the bearing bushing swings accordingly, when the worm shakes left and right, the side rubber pad and the spring piece both limit and buffer the movement; when the worm shakes up and down, the upper end of the spring piece abuts the housing, two ends press on the housing, deformed under force, provides damping, limits its tendency to move away from the worm gear. In this embodiment, adjusting the location of the preload device from the big end of the worm to the small end of the worm, may achieve a better preload effect to the worm gear and the worm. While the large end of the worm is installed with a pendulum bearing.

### Embodiment 4

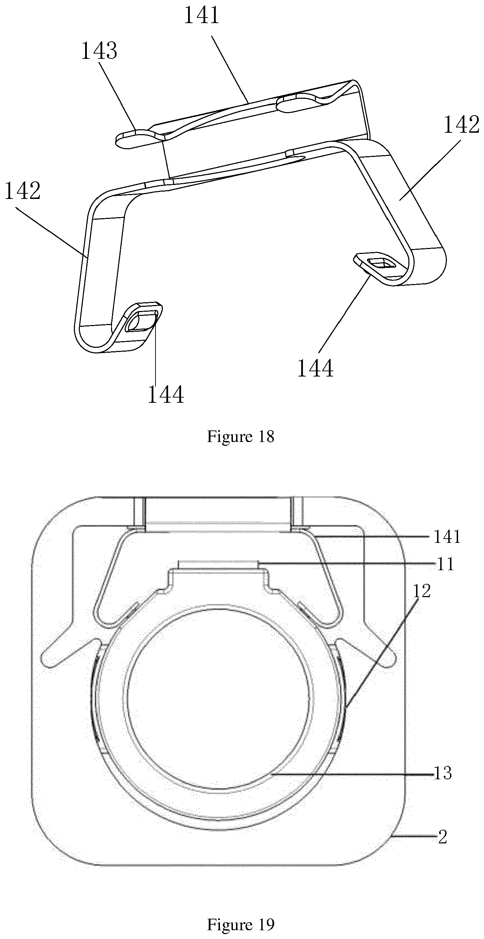

This embodiment provides a worm gear and worm assembling structure, which is almost the same as the worm gear and worm assembling structure of embodiment 3, which has differences on:
As shown in Figures 17-19, the spring piece 14 of this embodiment is formed by a C-shaped clip-shaped part 141 (fixed part) and two-wing inclined skirts 142 (extending parts), the outer edge of the upper piece of the C-shaped clip-shaped part 141 is upwardly tilted to form a tilted piece 143, two ends of the lower piece of the C-shaped clip-shaped part 141 are respectively connected with top ends of the two-wing inclined skirts 142, the bottom ends of the two-wing inclined skirts 142 are bent inward to form a bent part 144. The bent part is a smooth hook-shaped structure. By forming the bent part, a further buffer can be formed, and no sharp part that damages the bushing body is formed. Optionally, the bottom ends of the two-wing inclined skirts 142 may not form a bent part, while it may also be in the shape of a flat plate, and so on, which does not affect the implementation of the present invention. The C-shaped clip-shaped part 141 is arranged above the top surface of the bushing body.

In this embodiment, the C-shaped clip-shaped part 141 of the spring piece 14 is embedded and fixed on the housing. Through the elastic clamping between the upper piece and the lower piece of the C-shaped clip-shaped part 141, the spring piece 14 is tightly clamped to the housing (bearing support module 2). The upper part of the bearing support module 2 can also be formed with a dent section for clamping the C-shaped clip-shaped part 141, and the dent section can further achieve the limit of the C-shaped clip-shaped part 141 in the left-right direction.

The bent part 144 is tightly attached to the housing 13, so that the C-shaped clip-shaped part 141 is suspended and fixed above the top rubber pad 11.

In specific implementations, the structure of the spring piece shown in embodiment 3 or 4 can be selectively adopted, the spring piece shown in embodiments 3 and 4 can not only provide the preload force for swinging up and down, but also provide the preload force for swinging left and right, allowing the worm to swing freely within a certain range, also finely limiting the shaking of the worm, providing damping, meanwhile, the required preload force can be adjusted by adjusting the stiffness of the spring piece, so as to meet the requirements for engaging of various types of worm gears and worms.

In the description of the present invention, it should be understood that for the convenience of description, the orientations or positional relationships indicated by terms "upper", "lower", "front", "rear", "left", "right", "vertical", "horizontal", "top", "bottom", "inner", "outer", etc. are based on the orientations or positional relationships or relative positional relationships shown in the drawings, that is, the orientations or positions or relative positions of the members and mechanisms only when they are shown in the drawings, rather than indicating or implying that the pointed mechanism or element must have a specific orientation or a relative orientation, have a specific oriented structure, or perform a specific operation as described in the description of the present invention at any time and under any circumstances, thus can not be understood as limiting the present invention in this aspect.

## Claims

1. A bearing bushing (1), the bearing bushing (1) comprises: a bushing body (13) and a buffer member connected thereto; the buffer member comprising a spring piece (14,15), the spring piece (14,15) is arranged on the top of the bushing body, **characterized in that**, the spring piece (14,15) comprises an extending part and a fixed part (141,151), the extending part obliquely extends downward from two opposite sides of the fixed part; the buffer member further includes: a top elastic pad (11) fixed on the top surface of the bearing bushing (1) and/or side elastic pads (12) fixed on both sides of the top of the bearing bushing (1).

2. The bearing bushing (1) according to claim 1, wherein, the fixed part is arranged above the top surface of the bushing body, and one end of the extending part that is away from the fixed part abuts against both sides of the bushing body respectively.

3. The bearing bushing (1) according to claim 2, wherein, the fixed part is a C-shaped clip-shaped part (141).

4. The bearing bushing (1) according to claim 3, wherein an outer edge of an upper piece of the C-shaped clip-shaped part (141) is upwardly tilted to form a tilted piece, and both ends of an lower piece of the C-shaped clip-shaped part (141) are respectively connected to the extending part.

5. The bearing bushing (1) according to claim 2, wherein, an end of the extending part that is away from the fixed part is bent toward the bushing body to form a bent part (144).

6. The bearing bushing (1) according to claim 1, wherein, the fixed part is fixed to the top surface of the bushing body, an end of the extending part that is away from the fixed part is tilted outward with respect to both sides of the bushing body.

7. The bearing bushing (1) according to claim 6, wherein,the buffer member further comprises the top elastic pad (11) arranged on the top surface of the bushing body, the fixed part is arranged with a hole, and the hole is sleeved on the top elastic pad (11) so that the fixed part is fixed with respect to the bushing body.

8. The bearing bushing (1) according to claim 1, wherein, an end of the extending part that is away from the fixed part is arranged with a contact protrusion.

9. The bearing bushing (1) according to claim 1, wherein, the side elastic pads (12) are concave-shaped.

10. The bearing bushing (1) according to claim 9, wherein, the side elastic pads (12) extends along the circumferential direction of the bushing body.

11. A worm end preload structure for electric powered steering products, wherein, the worm end preload structure comprises the bearing bushing (1) according to any of claims 1-10; the worm end preload structure further includes a bearing (5), and the bearing (5) is arranged inside the bearing bushing (1).

12. A worm gear and worm assembling structure, wherein, it comprises the worm end preload structure according to claim 11;
the worm gear and worm assembling structure further includes a bearing support module (2) arranged to one end of the worm (3), the worm end preload structure is arranged in the bearing support module (2), and is arranged in between of the worm (3) and the bearing support module (2).

13. The worm gear and worm assembling structure according to claim 12, wherein, the fixed part is fixed to the top surface of the bushing body, an end of the extending part that is away from the fixed part is tilted outward with respect to both sides of the bushing body;
two sides of an inner hole of the bearing support module (2) are formed into insert holes (21), the bearing bushing (1) is arranged in the inner hole, the extending part is inserted into the insert holes (21), and the top surface of the bearing bushing (1) abuts against the top surface of the inner hole.

14. The worm gear and worm assembling structure according to claim 12, wherein, the fixed part arranged on the top surface of the bushing body, one end of the extending part that is away from the fixed part abuts against two sides of the bushing body, respectively;
the fixed part is fixed to the bearing support module (2);

15. The worm gear and worm assembling structure according to claim 14, wherein, the fixed part is a C-shaped clip-shaped part (141); the fixed part is clamped to the upper part of the bearing support module (2).

## Patentansprüche

1. Lagerbuchse (1), wobei die Lagerbuchse (1) Folgendes umfasst: einen Buchsenkörper (13) und ein damit verbundenes Pufferelement;
das Pufferelement ein Federstück (14,15) umfasst, das Federstück (14,15) auf der Oberseite des Buchsenkörpers angeordnet ist, **dadurch gekennzeichnet, dass**
das Federstück (14,15) ein sich erstreckendes Teil und ein festes Teil (141,151) umfasst, wobei sich das sich erstreckende Teil von zwei gegenüberliegenden Seiten des festen Teils schräg nach unten erstreckt;
das Pufferelement ferner Folgendes beinhaltet: ein oberes elastisches Polster (11), das an der Oberseite der Lagerbuchse (1) befestigt ist, und/oder seitliche elastische Polster (12), die an beiden Seiten der Oberseite der Lagerbuchse (1) befestigt sind.

2. Lagerbuchse (1) nach Anspruch 1, wobei das feste Teil über der Oberseite des Buchsenkörpers angeordnet ist bzw. ein Ende des sich erstreckenden Teils, das von dem festen Teil abseits ist, an beiden Seiten des Buchsenkörpers anliegt.

3. Lagerbuchse (1) nach Anspruch 2, wobei das feste Teil ein C-förmiges, bügelförmiges Teil (141) ist.

4. Lagerbuchse (1) nach Anspruch 3, wobei ein äußerer Rand eines oberen Teils des C-förmigen, bügelförmigen Teils (141) nach oben gekippt ist, um ein gekipptes Teil auszubilden, und beide Enden eines unteren Teils des C-förmigen, bügelförmigen Teils (141) jeweils mit dem sich erstreckenden Teil verbunden sind.

5. Lagerbuchse (1) nach Anspruch 2, wobei ein Ende des sich erstreckenden Teils, das von dem festen Teil abseits ist, in Richtung des Buchsenkörpers gebogen ist, um ein gebogenes Teil (144) auszubilden.

6. Lagerbuchse (1) nach Anspruch 1, wobei das feste Teil an der Oberseite des Buchsenkörpers befestigt ist, ein Ende des sich erstreckenden Teils, das von dem festen Teil abseits ist, in Bezug auf beide Seiten des Buchsenkörpers nach außen geneigt ist.

7. Lagerbuchse (1) nach Anspruch 6, wobei das Pufferelement ferner das obere elastische Polster (11) umfasst, das auf der Oberseite des Buchsenkörpers angeordnet ist, das feste Teil mit einem Loch angeordnet ist und das Loch auf dem oberen elastischen Polster (11) so umhüllt ist, dass das feste Teil in Bezug auf den Buchsenkörper befestigt ist.

8. Lagerbuchse (1) nach Anspruch 1, wobei ein Ende des sich erstreckenden Teils, das von dem festen Teil abseits ist, mit einem Kontaktvorsprung angeordnet ist.

9. Lagerbuchse (1) nach Anspruch 1, wobei die seitlichen elastischen Polster (12) konkav geformt sind.

10. Lagerbuchse (1) nach Anspruch 9, wobei sich die seitlichen elastischen Polster (12) entlang der Umfangsrichtung des Buchsenkörpers erstrecken.

11. Schneckenende-Vorspannstruktur für elektrisch angetriebene Lenkprodukte, wobei die Schneckenende-Vorspannstruktur die Lagerbuchse (1) nach einem der Ansprüche 1-10 umfasst; die Schneckenende-Vorspannstruktur ferner ein Lager (5) beinhaltet und das Lager (5) im Inneren der Lagerbuchse (1) angeordnet ist.

12. Schneckengetriebe- und Schneckenmontagestruktur, wobei sie die Schneckenende-Vorspannstruktur nach Anspruch 11 umfasst;
die Schneckengetriebe- und Schneckenmontagestruktur ferner ein Lagerträgermodul (2) beinhaltet, das an einem Ende der Schnecke (3) angeordnet ist, wobei die Schneckenende-Vorspannstruktur in dem Lagerträgermodul (2) angeordnet ist und zwischen der Schnecke (3) und dem Lagerträgermodul (2) angeordnet ist.

13. Schneckengetriebe- und Schneckenmontagestruktur nach Anspruch 12, wobei das feste Teil an der Oberseite des Buchsenkörpers befestigt ist, ein Ende des sich erstreckenden Teils, das von dem festen Teil abseits ist, in Bezug auf beide Seiten des Buchsenkörpers nach außen geneigt ist;
zwei Seiten eines inneren Lochs des Lagerträgermoduls (2) in Einstecklöchern (21) ausgebildet sind, die Lagerbuchse (1) in dem inneren Loch angeordnet ist, das sich erstreckende Teil in die Einstecklöcher (21) eingesteckt ist und die Oberseite der Lagerbuchse (1) an der Oberseite des inneren Lochs anliegt.

14. Schneckengetriebe- und Schneckenmontagestruktur nach Anspruch 12, wobei das feste Teil, das an der Oberseite des Buchsenkörpers angeordnet ist, bzw. ein Ende des sich erstreckenden Teils, das von dem festen Teil abseits ist, an zwei Seiten des Buchsenkörpers anliegt;
das feste Teil an dem Lagerträgermodul (2) befestigt ist.

15. Schneckengetriebe- und Schneckenmontagestruktur nach Anspruch 14, wobei das feste Teil ein C-förmiges, bügelförmiges Teil (141) ist;
das feste Teil an das obere Teil des Lagerträgermoduls (2) geklemmt ist.

## Revendications

1. Bague de palier (1), la bague de palier (1) comprend : un corps de bague (13) et un élément tampon relié à celui-ci ;
l'élément tampon comprenant une pièce à ressort (14, 15), la pièce à ressort (14, 15) est agencée sur le dessus du corps de bague, **caractérisée en ce que**,
la pièce à ressort (14, 15) comprend une partie prolongeable et une partie fixe (141, 151), la partie prolongeable se prolonge obliquement vers le bas à partir de deux côtés opposés de la partie fixe ;
l'élément tampon comporte également : une tablette élastique supérieure (11) fixée sur la surface supérieure de la bague de palier (1) et/ou des tablettes élastiques latérales (12) fixées de part et d'autre du dessus de la bague de palier (1).

2. Bague de palier (1) selon la revendication 1, dans laquelle la partie fixe est agencée au-dessus de la surface supérieure du corps de bague, et une extrémité de la partie prolongeable qui est éloignée de la partie fixe vient en butée contre les deux côtés du corps de bague respectivement.

3. Bague de palier (1) selon la revendication 2, dans laquelle la partie fixe est une partie en forme de clip en forme de C (141).

4. Bague de palier (1) selon la revendication 3, dans laquelle un bord extérieur d'une pièce supérieure de la partie en forme de clip en forme de C (141) est incliné vers le haut pour former une pièce inclinée, et les deux extrémités d'une pièce inférieure de la partie en forme de clip en forme de C (141) sont respectivement reliées à la partie prolongeable.

5. Bague de palier (1) selon la revendication 2, dans laquelle une extrémité de la partie prolongeable qui est éloignée de la partie fixe est pliée vers le corps de bague pour former une partie pliée (144).

6. Bague de palier (1) selon la revendication 1, dans laquelle la partie fixe est fixée à la surface supérieure du corps de bague, une extrémité de la partie prolongeable qui est éloignée de la partie fixe est inclinée vers l'extérieur par rapport aux deux côtés du corps de bague.

7. Bague de palier (1) selon la revendication 6, dans laquelle l'élément tampon comprend également la tablette élastique supérieure (11) agencée sur la surface supérieure du corps de bague, la partie fixe est agencée avec un trou, et le trou est emmanché sur la tablette élastique supérieure (11) de sorte que la partie fixe est fixée par rapport au corps de bague.

8. Bague de palier (1) selon la revendication 1, dans laquelle une extrémité de la partie prolongeable qui est éloignée de la partie fixe est agencée avec une saillie de contact.

9. Bague de palier (1) selon la revendication 1, dans laquelle les tablettes élastiques latérales (12) sont de forme concave.

10. Bague de palier (1) selon la revendication 9, dans laquelle les tablettes élastiques latérales (12) se prolongent le long de la direction circonférentielle du corps du bague.

11. Structure de précharge d'extrémité de vis sans fin pour produits de direction assistée électrique, dans laquelle la structure de précharge d'extrémité de vis sans fin comprend la bague de palier (1) selon l'une quelconque des revendications 1 à 10 ; la structure de précharge d'extrémité de vis sans fin comporte également un palier (5), et le palier (5) est agencé à l'intérieur de la bague de palier (1).

12. Structure d'assemblage d'engrenage à vis sans fin et de vis sans fin, dans laquelle elle comprend la structure de précharge d'extrémité de vis sans fin selon la revendication 11 ;
la structure d'assemblage d'engrenage à vis sans fin et de vis sans fin comporte également un module de support de palier (2) agencé à une extrémité de la vis sans fin (3), la structure de précharge d'extrémité de vis sans fin est agencée dans le module de support de palier (2), et est agencée entre la vis sans fin (3) et le module de support de palier (2).

13. Structure d'assemblage d'engrenage à vis sans fin et de vis sans fin selon la revendication 12, dans laquelle la partie fixe est fixée à la surface supérieure du corps de bague, une extrémité de la partie prolongeable qui est éloignée de la partie fixe est inclinée vers l'extérieur par rapport aux deux côtés du corps de bague ;
deux côtés d'un trou intérieur du module de support de palier (2) sont formés dans des trous d'insertion (21), la bague de palier (1) est agencée dans le trou intérieur, la partie prolongeable est insérée dans les trous d'insertion (21), et la surface supérieure de la bague de palier (1) vient en butée contre la surface supérieure du trou intérieur.

14. Structure d'assemblage d'engrenage à vis sans fin et de vis sans fin selon la revendication 12, dans laquelle la partie fixe agencée sur la surface supérieure du corps de bague, une extrémité de la partie prolongeable qui est éloignée de la partie fixe vient en butée contre deux côtés du corps de bague, respectivement ;
la partie fixe est fixée au module de support de palier (2) ;

15. Structure d'assemblage d'engrenage à vis sans fin et de vis sans fin selon la revendication 14, dans laquelle la partie fixe est une partie en forme de clip en forme de C (141) ;
la partie fixe est serrée sur la partie supérieure du module de support de palier (2).
